(19) **Europäisches Patentamt**
**European Patent Office**
**Office européen des brevets**

(11) **EP 1 827 699 B1**

(12) **EUROPÄISCHE PATENTSCHRIFT**

(45) Veröffentlichungstag und Bekanntmachung des Hinweises auf die Patenterteilung:
**15.06.2011  Patentblatt 2011/24**

(51) Int Cl.:
*B03D 1/02* *(2006.01)*  *B03D 1/24* *(2006.01)*
*C22B 15/00* *(2006.01)*

(21) Anmeldenummer: **05777851.6**

(22) Anmeldetag: **03.08.2005**

(86) Internationale Anmeldenummer:
**PCT/EP2005/053796**

(87) Internationale Veröffentlichungsnummer:
**WO 2006/061265 (15.06.2006 Gazette 2006/24)**

(54) **VERFAHREN ZUR DIMENSIONIERUNG EINER PNEUMATISCHEN FLOTATIONSSÄULE**

METHOD TO DESIGN A PNEUMATIC FLOTATION COLUMN

PROCÉDÉ POUR DIMENSIONNER UNE COLONNE DE FLOTTATION PNEUMATIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.12.2004  RU 2004135380**

(43) Veröffentlichungstag der Anmeldung:
**05.09.2007  Patentblatt 2007/36**

(73) Patentinhaber:
• **SIEMENS AKTIENGESELLSCHAFT**
**80333 München (DE)**
• **ZAO 'NPVZ Uralmechanobr-technika'**
**Jekaterinburg 620144 (RU)**

(72) Erfinder:
• **VIDUYETSKY, Marc Grigorjewitsch**
**Jekaterinburg, 620027 (RU)**

• **GARIFULIN, Igor Fagamjanowitsch**
**Jekaterinburg, 620102 (RU)**
• **MALZEW, Viktor Alexeewitsch**
**Jekaterinburg, 620077 (RU)**

(74) Vertreter: **Maier, Daniel Oliver et al**
**Siemens AG**
**CT IP Com E**
**Postfach 22 16 34**
**80506 München (DE)**

(56) Entgegenhaltungen:
**DE-A1- 2 836 496**   **FR-A- 2 726 203**
**US-A- 4 247 391**   **US-A- 4 722 784**
**US-A- 5 651 879**

Bemerkungen:
Die Akte enthält technische Angaben, die nach dem Eingang der Anmeldung eingereicht wurden und die nicht in dieser Patentschrift enthalten sind.

EP 1 827 699 B1

**Beschreibung**

Die Erfindung bezieht sich auf die Aufbereitung von Bodenschätzen und kann bei der Verarbeitung von mineralischen Stoffen, welche NE-, Schwarz-, seltene- und Edelmetalle sowie nichtmetallische Bodenschätze enthalten, verwendet werden. Die Erfindung betrifft ein Verfahren zur Dimensionierung einer pneumatischen Flotationssäule gemäß dem Oberbegriff von Patentanspruch 1.

Bekannt ist die pneumatische Flotationsmaschine, die mit dem Patent der Russischen Föderation Nr. 2038865, B 03 D 1/24 geschützt ist. Die Maschine beinhaltet eine Kammer mit einem Aerator innerhalb der Kammer, Schaumüberlaufkante, Aufgabevorrichtung als Rohr mit Öffnungen und ein Zirkulationsrohr.

Bekannt ist die pneumatische Flotationsmaschine, welche eine Kammer mit einem Aerator innerhalb der Kammer, eine Aufgabe- und Austragsvorrichtung, einen in der Mitte der Kammer angeordneten Airlift mit einem Mischer im unteren Teil enthält (Siehe Patent Russische Föderation Nr. 2054972, B 03 D 1/24).

Weitere Flotationsmaschinen sind in der US 4,722,784-A sowie der DE 28 36 496-A offenbart.

Am ähnlichsten vom technischen Grundsatz her ist die pneumatische Flotationssäule, die ein Zylindergehäuse, bestehend aus dem erweiterten oberen Teil und dem unteren Teil, eine Aufgabevorrichtung, ausgeführt als Ejektoren, eine Austragsvorrichtung, Aeratoren, einen Schaumsammelbehälter, eine als Airlift ausgeführte Vorrichtung für die Feinregelung des Trübespiegels in der Maschine, das ringförmige Prallblech, das im Querschnitt ein Dreieck darstellt, dessen Spitze zur Maschinenachse gerichtet ist, eine teleskopförmige Kammer, die sich im erweiterten Gehäuseteil befindet, enthält (Siehe Patent Russische Föderation Nr. 2132749, B 03 D 1/24).

Eine bekannte pneumatische Flotationssäule, die mit dem Patent der Russischen Föderation Nr. 2132749, B 03 D 1/24 geschützt ist, wurde in der Maschine KFM-1400 realisiert (Entwicklung des Institutes "Uralmachanobr") und hat die in der Tabelle 1 angeführten Maße.

Weitere pneumatische Flotationssäulen sind beispielsweise aus der US 5,651,879, der US 4,722,784, der DE 28 36 496 A1 und der FR 2 725 208 A1 bekannt.

Tabelle 1

| Gehäusemaße der pneumatischen Flotationssäule KFM-1400 | | |
|---|---|---|
| Kurzbezeichnung | Bezeichnung der einzelnen Gehäuseteile | Maß in Meter (m) |
| D | Durchmesser des erweiterten oberen Teiles des Zylindergehäuses | 2,2 |
| d | Durchmesser des unteren Teiles des Zylindergehäuses | 1,4 |
| $h_1$ | Höhe des erweiterten oberen Teiles des Zylindergehäuses | 4,24 |
| $h_2$ | Höhe des unteren Teiles des Zylindergehäuses | 4,42 |
| $h_1 + h_2$ | Gesamthöhe der Maschine | 8,66 |

Die bekannte Maschine hat den Nachteil, dass bei der Erhöhung der erforderlichen Leistung nach dem Aufgabe- und Schaumprodukt die Gehäusemaße unvertretbar zunehmen und dadurch zur wesentlichen Steigerung der Materialintensität beitragen.

Darüber hinaus hat die bekannte Maschine im Vergleich zu mechanischen und pneumatischen Maschinen desselben Volumens eine geringere Fläche der Schaumbildung sowie eine geringere geometrische Länge der Austragswehr (Siehe Tabelle 2).

Tabelle 2

| Konstruktionsparameter der bekannten Flotationssäule und der pneumatisch-mechanischen Flotationsmaschine. | | | |
|---|---|---|---|
| Konstruktionsparameter | Maßeinheit | Flotationsmaschine | |
| | | Bekannte Flotationssäule | FPM-3,2 (6 Kammern) |
| Maschinenvolumen | $m^3$ | 19 | 19,2 |
| Fläche der Schaumbildung | $m^2$ | 3,8 | 16,8 |
| Länge der Austragswehr | m | 6,9 | 9,6 |

Dies führt dazu, dass der Flotationsprozess in der bekannten Flotationssäule eine Reihe von Nachteilen aufweist: die sich bildenden Aeroflocken (Gebilde, welche aus Luftblasen und mineralischen Teilchen bestehen) verweilen vom Zeitpunkt der Entstehung bis zum Zeitpunkt der Zuführung zum Schaumprodukt in der Trübe länger als in den mechanischen und pneumatischen Maschinen, und Prozesse des Zusammenstosses und der gegenseitigen Vernichtung von Aeroflocken finden wegen mangelnden freien Platzes auf der Trübeoberfläche in der Schaumschicht statt. Die Nachteile des Flotationsprozesses in der bekannten Flotationssäule verursachen die Senkung ihrer Leistung nach dem Schaumprodukt und führen dazu, dass sie bei Flotationsstufen eines reichen Ausgangsrohstoffes, wo ein großes Ausbringen des Schaumproduktes erforderlich ist, nicht ausreichend effizient funktioniert.

Die technische Aufgabe, auf deren Lösung die Erfindung gerichtet ist, ist die Leistungssteigerung nach dem Schaumprodukt.

Die gestellte technische Aufgabe wird dadurch erreicht, dass der Durchmesser des erweiterten Gehäuseteiles in der bekannten Maschine, die ein Zylindergehäuse, bestehend aus einem erweiterten oberen Teil und dem unteren Teil, eine Aufgabe-, Belüftungs- und Austragsvorrichtung, ausgeführt als Ejektoren, eine Austragsvorrichtung, einen Schaumsammelbehälter beinhaltet, anhand nachfolgender Gleichung ermittelt wurde:

$$D = \sqrt{k_1 \cdot d \cdot (h_1 + h_2)}$$

In der Gleichung sind:

D - der Durchmesser des erweiterten oberen Teiles des Zylindergehäuses [m] ;
$k_1$ - ein empirischer Koeffizient für die Berechnung des Durchmessers des erweiterten oberen Teiles des Zylindergehäuses, vorzugsweise gewählt von 1,0 bis 1,4;
$h_1$ - die Höhe des erweiterten oberen Teiles des Gehäuses [m], mit folgender Beziehung $h_1 = k_2 \cdot h_2$ ;
$k_2$ - ein empirischer Koeffizient für die Berechnung der Höhe des erweiterten oberen Teiles des Zylindergehäuses, gewählt von 0,2 bis 1,0.
$h_2$ - die Höhe des unteren Teiles des Zylindergehäuses [m];
d - der Durchmesser des unteren Teiles des Zylindergehäuses, der von der erforderlichen Maschinenleistung nach dem Aufgabegut gemäß Gleichung $d^2 = k_3 \cdot Q$ abhängig ist [m] ;
Q - die erforderliche Maschinenleistung nach dem Aufgabegut, vorzugsweise in der Maßeinheit Tonnen pro Stunde (t/h) bestimmt;
$k_3$ - ein empirischer Koeffizient für die Berechnung des Durchmessers des unteren Teiles des Zylindergehäuses, gewählt von 0,015 bis 0,03 [$m^2h/t$].

Derart wird einerseits eine Steigerung der Maschinenproduktivität nach dem Schaumprodukt durch die Flächenvergrößerung des erweiterten oberen Teiles des Zylindergehäuses und zugleich eine Senkung der Materialintensität durch die Optimierung der Maße bewirkt.

Die Aufgabe wird dem zu folge gelöst durch ein Verfahren zur Dimensionierung einer pneumatischen Flotationssäule unter Verwendung der vorangehend beschriebenen Gleichung.

Darüber kann der Schaumsammelbehälter der pneumatischen Flotationssäule in vorteilhafter Weiterbildung der Erfindung als giebelförmige Rinne ausgeführt und mit gegenüberliegenden Stutzen zum Austrag des Schaumproduktes ausgestattet werden.

Mit Vorteil ist die giebelförmige Rinne, d.h. die giebelförmige Schaumrinne derart angebracht, dass Flächen an der Grundflotationskammer 1 zum Anbringen eines oder mehrerer Ejektoren, und/oder andere Anbauten frei bleiben, d.h. zur Verfügung stehen.

Die beschriebene Konstruktion des Schaumsammelbehälters, ausgeführt als giebelförmige Rinne ermöglicht fast die zweifache Reduzierung ihrer Höhe beim Beibehalten eines ausreichenden Neigungswinkels des Bodens.

Der optimale Durchmesser des unteren Teiles des Zylindergehäuses der Flotationssäule hängt von der Menge der durchzusetzenden Trübemenge, d.h. von der Maschinenleistung nach dem Aufgabegut ab. Wie die experimentellen Untersuchungen gezeigt haben, beträgt für die Flotationsmaschine mit einem Durchmesser des unteren Teiles des Gehäuse von 1,4 m die optimale Leistung nach dem Aufgabegut 60 bis 120 t/h (nach der Trübe 160 bis 320 $m^3$/h). Die Durchsatzleistung der Maschine nach der Trübe wurde mittels Querschnittsfläche des unteren Teiles des Gehäuses, deren Formel den Durchmesser des unteren Teiles des Gehäuses im Quadrat beinhaltet, ermittelt. Auf diese Weise ist das Quadrat des optimalen Durchmessers des unteren Teiles des Maschinengehäuses und ihre Leistung durch die Gleichung $d^2 = k_3 \cdot Q$ verbunden, wo der Proportionalitätskoeffizient $k_3$ die Werte von 0,015 bis 0,03 annehmen kann.

In experimentellen Untersuchungen wurde festgestellt, dass in der pneumatischen Flotationssäule die optimale Tauchtiefe der Aufgabe- und Belüftungsvorrichtung (Ejektor) in die Trübe, welche die Höhe $h_1$ des erweiterten oberen Teiles des Zylindergehäuses bestimmt, 1 bis 2 m beträgt, und die optimale Tauchtiefe der Belüftungsvorrichtung (Dispergierer), welche die gesamte Maschinenhöhe $h_1 + h_2$ bestimmt, 4 bis 6 m beträgt. Das Überschreiten der genannten Werte der Eintauchtiefe in die Trübe durch Ejektor und Dispergierer führt zu einer nicht vertretbaren Steigerung der Gesamthöhe und der Materialintensität der Flotationsmaschine ohne ihre Leistungssteigerung nach dem Aufgabe- und Schaumprodukt. Also, sind die optimalen Werte $h_1$ und $h_2$ durch die Gleichung $h_1 = k_2 \cdot h_2$ verbunden, wobei der Proportionalitätskoeffizient $k_2$ die Werte von 0,2 bis 1,0 annehmen kann.

In experimentellen Untersuchungen wurde die Abhängigkeit der Leistung der Flotationssäule nach dem Schaumprodukt bei der Grundflotation des kupferhaltigen Rohstoffes vom Durchmesser des erweiterten oberen Teiles des Zylindergehäuses und der Gesamthöhe des Apparates ermittelt (Tabelle 3).

Tabelle 3

| Gesamthöhe, in Meter (m) | Durchmesser des unteren Teiles, in Meter (m) | Durchmesser des oberen Teiles, in Meter (m) | Flotationskennzahlen, % | | | Leistung nach dem Schaumprodukt, in Tonnen pro Stunde (t/h) |
|---|---|---|---|---|---|---|
| | | | Ausbringen des Schaumproduktes | Kupfergehalt im Schaumprodukt | Kupferausbringen im Schaumprodukt | |
| 9 | 1,4 | 2,2 | 7,0 | 8,3 | 35,2 | 7,7 |
| 7,5 | 1,4 | 2,2 | 8,1 | 8,3 | 40,7 | 8,9 |
| 6 | 1,4 | 3,0 | 11,0 | 8,1 | 54,0 | 12,1 |
| 4 | 1,4 | 3,0 | 21,9 | 5,2* | 69,1 | 24,1 |

Abhängigkeit der Flotationkennzahlen des kupferhaltigen Rohstoffes vom Durchmesser des erweiterten oberen Teiles des Zylindergehäuses und der Gesamthöhe des Säulenapparates.

Anmerkung:* - Schaumprodukt der nicht zufriedenstellenden Qualität.

Aus den in der Tabelle 3 angeführten Daten ist ersichtlich, dass die optimalen Flotationsergebnisse in der Flotationsmaschine erzielt wurden, deren Durchmesser des erweiterten oberen Teiles D mit dem Durchmesser des unteren Teiles d und der Gesamthöhe des Apparates $h_1 + h_2$ durch die folgende Gleichung verbunden ist:

$$D = \sqrt{k_1 \cdot d \cdot (h_1 + h_2)} = \sqrt{1,1 \cdot 1,4 \cdot 6} = 3\,m$$

Um die Förderfähigkeit des Schaumsammelbehälters nach dem Schaumprodukt bei gleichzeitiger Verringerung seiner Höhe zu steigern, wurde der Schaumsammelbehälter als giebelförmige Rinne ausgeführt und mit gegenüberliegenden Stutzen zum Austragen des Schaumproduktes ausgestattet.

Die vorliegende Erfindung wird beispielhaft anhand der Zeichnungen erläutert:

FIG 1   zeigt die erfindungsgemäß dimensionierte pneumatische Flotationssäule, in einer als Vorderansicht im Halbschnitt dargestellten Gesamtansicht,

FIG 2   zeigt eine Seitenansicht der erfindungsgemäß dimensionierten pneuma- tischen Flotationssäule,

FIG 3   zeigt eine Draufsicht der erfindungsgemäß dimensionierten pneumati- schen Flotationssäule

Die pneumatische Flotationssäule, d.h. die Flotationsmaschine beinhaltet die Grundflotationskammer 1 mit der giebelförmigen Schaumrinne 2, innerhalb deren die Nachflotationskammer 3 untergebracht ist. Die Kammer 1 ist mit Aufgabe- und Belüftungsvorrichtungen - Ejektoren 4 und die Kammer 3 mit Belüftungsvorrichtung 5, die im unteren Teil der Nachflotationskammer 3 untergebracht ist, ausgestattet. Die Nachflotationskammer 3 ist mit der Bodenaustragsvorrichtung 6 und die Schaumrinne 2 mit Stutzen zum Austragen des Schaumproduktes 7 ausgestattet. Die Nachflotationskammer 3 ist mit ringförmigem Prallblech 8 versehen.

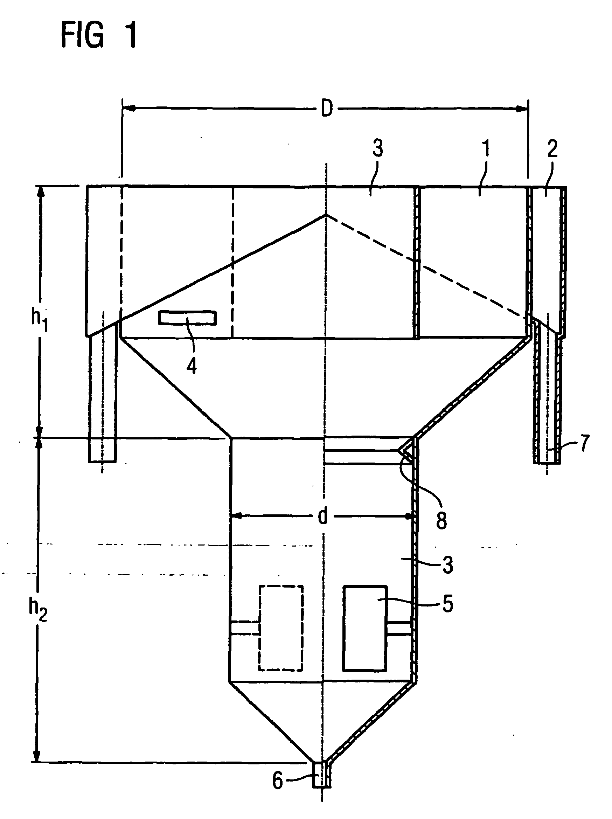

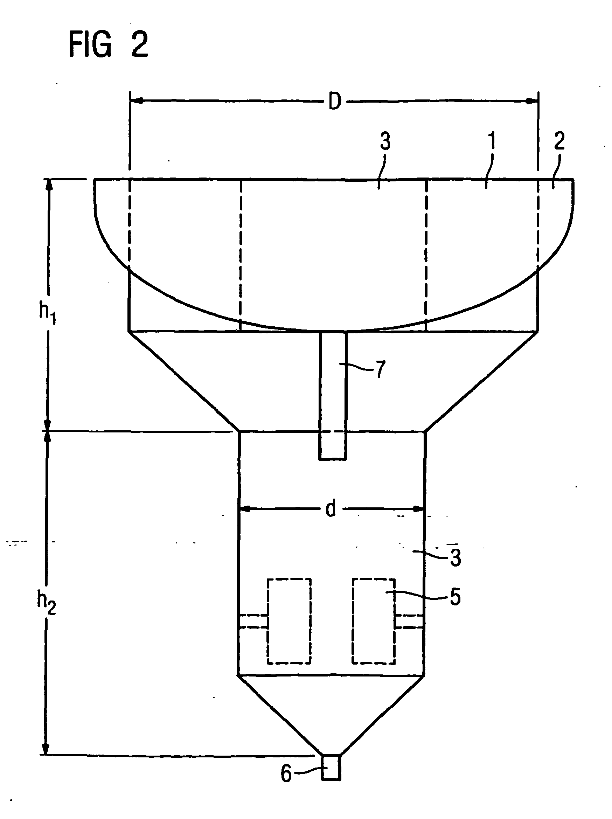

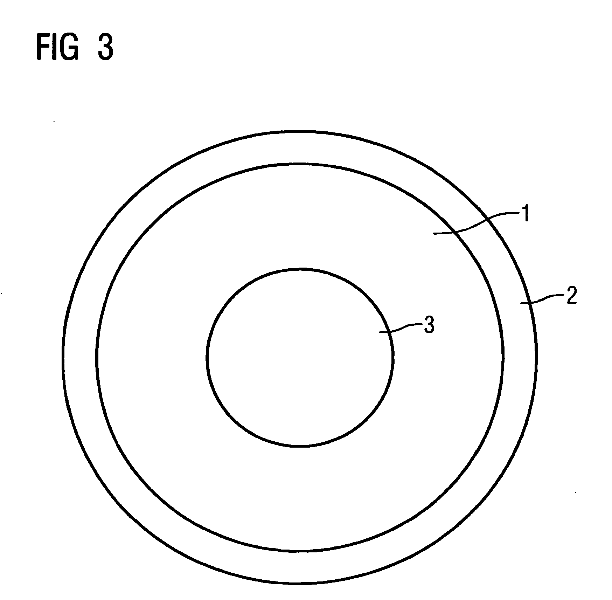

Die in den Figuren 1 bis 3 gezeigte Flotationsmaschine weist einen Durchmesser D des erweiterten oberen Teils des Zylindergehäuses auf, der größer ist als der Durchmesser d des unteren Teils des Zylindergehäuses der Flotationsmaschine. Die Höhe des erweiterten oberen Teils des Zylindergehäuses ist mit $h_1$ bezeichnet. Die Höhe des unteren Teils des Zylindergehäuses der Flotationsmaschine ist mit $h_2$ bezeichnet. Dementsprechend ergibt sich die Gesamthöhe der Flotationsmaschine als $h_1 + h_2$.

Die gezeigte Flotationsmaschine funktioniert auf folgende Art und Weise.

Die zuvor mit Reagenzien bearbeitete Trübe gelangt über den Ejektor 4 in die Grundflotationskammer 1. Gleichzeitig wird dem Ejektor 4 Luft zugeführt, die mit hydrophoben Körnern der Trübe in Berührung kommt, wobei Aeroflocken entstehen. Die Aeroflocken bilden beim Aufschwimmen das Schaumprodukt. Das Schaumprodukt wird in die Schaumrinne 2 ausgetragen und über die Stutzen 7 zum Eindicken geleitet (auf der Zeichnung nicht dargestellt). Die Körner mit einer nicht ausreichend hydrophobierten Oberfläche sowie die hydrophilen Körner werden der Nachflotationskammer 3 zugeführt. In der Nachflotationskammer 3 entstehen die Aeroflocken, die das Schaumprodukt im oberen Teil der Nachflotationskammer 3 bilden. Das ringförmige Prallblech 8 ermöglicht es, einen Kontakt zwischen dem Mineral und den Luftblasen nicht im Gegenstrom, sondern unter einem Winkel herzustellen, d.h. optimale Bedingungen für die Flotation der Körner in der Nachflotationskammer 3 zu schaffen. Die hydrophilen Körner sinken auf den Bodenteil der Nachflotationskammer 3 ab und werden über die Bodenaustragsvorrichtung 6 ausgetragen. Das Schaumprodukt gelangt aus der Nachflotationskammer 3 über ihre Oberkante auf die Schaumschicht der Grundflotationskammer und anschließend in die Schaumrinne 2.

Die erfindungsgemäß dimensionierte Flotationsmaschine wurde bei der Grundflotation des kupferhaltigen Erzes im Vergleich zu der bekannten Maschine KFM-1400 getestet. Die Testergebnisse sind in der Tabelle 4 dargestellt.

Tabelle 4

| Testergebnisse | | | |
|---|---|---|---|
| Lfd. Nr. | Bezeichnung der Kennzahlen | Flotationsmaschinen | |
| | | Erfindungsgemäße Maschine | KFM-1400 |
| 1. | Maschinenhöhe, in Meter (m) | 6 | 9 |
| 2. | Durchmesser der Grundflotationskammer, in Meter (m) | 3,0 | 2,2 |
| 3. | Maschinenvolumen, in Kubikmeter (m$^3$) | 14,7 | 19 |
| 4. | Leistung nach dem Schaumprodukt, in Tonnen pro Stunde (t/h) | 11,0 | 7,0 |

(fortgesetzt)

| Lfd. Nr. | Bezeichnung der Kennzahlen | Flotationsmaschinen | |
| --- | --- | --- | --- |
| | | Erfindungsgemäße Maschine | KFM-1400 |
| 5. | Kupfergehalt im Schaumprodukt, in Prozent (% | 8,12 | 8,31 |

Die Ergebnisse in der Tabelle 4 zeigen deutlich auf, dass die erfindungsgemäße Konstruktion der pneumatischen Flotationssäule durch die Vergrößerung des Durchmessers des erweiterten oberen Teiles des Zylindergehäuses und durch die Optimierung der Maße eine Leistungssteigerung nach dem Schaumprodukt bei gleichzeitiger Senkung ihres Volumens und der Materialintensität ermöglicht.

Die Erfindung ist auf die Steigerung der Maschinenproduktivität nach dem Schaumprodukt durch die Flächenvergrößerung des erweiterten oberen Teiles des Zylindergehäuses und die Senkung der Materialintensität durch die Optimierung ihrer Maße gerichtet. Das genannte Ergebnis wird dadurch erreicht, dass der Durchmesser des erweiterten Gehäuseteiles in der bekannten Maschine, die ein Zylindergehäuse, bestehend aus einem erweiterten oberen Teil und dem unteren Teil, eine Aufgabe-, Belüftungs- und Austragsvorrichtung, ausgeführt als Ejektoren, eine Austragsvorrichtung, einen Schaumsammelbehälter beinhaltet, anhand einer Gleichung in Abhängigkeit des Durchmessers des unteren Teiles des Zylindergehäuses, der Höhe des erweiterten oberen Teiles des Zylindergehäuses und der Höhe des unteren Teiles des Zylindergehäuses ermittelt wurde. Darüber hinaus ist der Schaumsammelbehälter der pneumatischen Flotationssäule als giebelförmige Rinne ausgeführt und mit gegenüberliegenden Stutzen zum Austragen des Schaumproduktes ausgestattet.

## Patentansprüche

1. Verfahren zur Dimensionierung einer pneumatischen Flotationssäule, welche ein Zylindergehäuse, bestehend aus einem erweiterten oberen Teil und einem unteren Teil, eine Aufgabe-, Belüftungs- und Austragsvorrichtung, einen Schaumsammelbehälter beinhaltet, wobei ein Durchmesser D des oberen Teils des Zylindergehäuses größer ist als ein Durchmesser d des unteren Teils des Zylindergehäuses,
**dadurch gekennzeichnet, dass** der Durchmesser D des erweiterten oberen Teiles des Zylindergehäuses folgender Gleichung entspricht:

$$D = \sqrt{k_1 \cdot d \cdot (h_1 + h_2)}$$

wobei:

D - Durchmesser des erweiterten oberen Teiles des Zylindergehäuses [m];
$k_1$ - empirischer Koeffizient für die Berechnung des Durchmessers des erweiterten oberen Teiles des Zylindergehäuses, gewählt von 1,0 bis 1,4;
$h_1$ - Höhe des erweiterten oberen Teiles des Gehäuses [m], gleich $h_1 = k_2 \cdot h_2$;
$k_2$ - empirischer Koeffizient für die Berechnung der Höhe des erweiterten oberen Teiles des Zylindergehäuses, gewählt von 0,2 bis 1,0;
$h_2$ - Höhe des unteren Teiles des Zylindergehäuses [m];
d - Durchmesser des unteren Teiles des Zylindergehäuses, der von der Maschinenleistung nach dem Aufgabegut gemäß Gleichung $d^2 - k_3 \cdot Q$ abhängig ist [m];
Q - Maschinenleistung in Tonnen Aufgabegut pro Stunde [t/h];
$k_3$ - empirischer Koeffizient für die Berechnung des Durchmessers des unteren Teiles des Zylindergehäuses, gewählt von 0,015 bis 0,03 [$m^2 h/t$] ;

sind.

2. Verfahren zur Dimensionierung einer pneumatische Flotationssäule nach Anspruch 1,
**dadurch gekennzeichnet, dass** der Schaumsammelbehälter als giebelförmige Schaumrinne (2) ausgeführt und mit gegenüberliegenden Stutzen (7) zum Austragen eines Schaumproduktes ausgestattet ist.

3. Verfahren zur Dimensionierung einer peumatische Flotationssäule nach Anspruch 2,

**dadurch gekennzeichnet, dass** die giebelförmige Schaumrinne (2) derart angebracht ist, dass Flächen an einer Grundflotationskammer (1) im oberen Teil des Zylindergehäuses zum Anbringen mindestens eines Ejektors (4) und/ oder anderer Anbauten zur Verfügung stehen.

## Claims

1. Method for dimensioning a pneumatic flotation column, which contains a cylindrical housing consisting of a widened upper part and of a lower part, a feed, aeration and discharge device and a foam collecting container, a diameter D of the upper part of the cylindrical housing being larger than a diameter d of the lower part of the cylindrical housing, **characterized in that** the diameter D of the widened upper part of the cylindrical housing corresponds to the following equation:

$$D = \sqrt{k_1 \cdot d \bullet (h_1 + h_2)}$$

in which:

D - diameter of the widened upper part of the cylindrical housing [m];
$k_1$ - empirical coefficient for calculating the diameter of the widened upper part of the cylindrical housing, selected from 1.0 to 1.4;
$h_1$ - height of the widened upper part of the housing, equal to $h_1$ $k_2$ - $h_2$ [m];
$k_2$ - empirical coefficient for calculating the height of the widened upper part of the cylindrical housing, selected from 0.2 to 1.0;
$h_2$ - height of the lower part of the cylindrical housing [m];
d - diameter of the lower part of the cylindrical housing,
which is dependent on the machine performance in terms of the feed material according to the equation $d^2 = k_3 \cdot Q$ [m];
Q - machine performance in metric tons of the feed material per hour [t/h];
$k_3$ - empirical coefficient for calculating the diameter of the lower part of the cylindrical housing, selected from 0.015 to 0.03 [$m^2 h/t$];

2. Method for dimensioning a pneumatic flotation column according to Claim 1, **characterized in that** the foam collecting container is designed as a gable-shaped foam channel (2) and is equipped with opposite connection pieces (7) for discharging a foam product.

3. Method for dimensioning a pneumatic flotation column according to Claim 2, **characterized in that** the gable-shaped foam channel (2) is mounted in such a way that surfaces on a basic flotation chamber (1) in the upper part of the cylindrical housing are available for mounting at least one ejector (4) and/or other attachments.

## Revendications

1. Procédé pour dimensionner une colonne de flottation pneumatique qui comprend une enveloppe cylindrique constituée d'une partie supérieure élargie et d'une partie inférieure, un dispositif de chargement, d'aération et d'extraction, un récipient collecteur de mousse, un diamètre D de la partie supérieure de l'enveloppe cylindrique étant plus grand qu'un diamètre d de la partie inférieure de l'enveloppe cylindrique, **caractérisé en ce que** le diamètre D de la partie supérieure élargie de l'enveloppe cylindrique répond à l'équation suivante :

$$D = \sqrt{k_1 \cdot d \cdot (h_1 + h_2)}$$

dans laquelle

D - diamètre de la partie supérieure élargie de l'enveloppe cylindrique [m] ;
$k_1$ - coefficient empirique pour le calcul du diamètre de la partie supérieure élargie de l'enveloppe cylindrique, choisi de 1,0 jusqu'à 1,4 ;

$h_1$ - hauteur de la partie supérieure élargie de l'enveloppe [m], égale $h_1 = k_2 \cdot h_2$

$k_2$ - coefficient empirique pour le calcul de la hauteur de la partie supérieure élargie de l'enveloppe cylindrique, choisi de 0,2 à 1,0 ;

$h_2$ - hauteur de la partie inférieure de l'enveloppe cylindrique [m] ;

d - diamètre de la partie inférieure de l'enveloppe cylindrique [m], qui dépend de la puissance de la machine en fonction de la matière de charge suivant l'équation $d^2 = k_3 \cdot Q$ ;

Q - puissance de la machine en tonne de matière de charge à l'heure [t/h] ;

$K_3$ - coefficient empirique pour le calcul du diamètre de la partie inférieure de l'enveloppe cylindrique, choisi de 0,015 à 0,03 [$m^2h/t$] ;

2. Procédé pour dimensionner une colonne de flottation pneumatique suivant la revendication 1, **caractérisé en ce que** le récipient collecteur de mousse est réalisé sous la forme d'une goulotte (2) à mousse en forme de pignon et est équipé de tubulures (7) opposées pour l'extraction d'un produit mousse.

3. Procédé pour dimensionner une colonne de flottation pneumatique suivant la revendication 2, **caractérisé en ce que** la goulotte (2) à mousse en forme de pignon est mise de sorte que des surfaces sur une chambre (1) de flottation de base dans la partie supérieure de l'enveloppe cylindrique soient disponibles pour mettre au moins un éjecteur (4) et/ou d'autres pièces rapportées.

## FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- RU 2038865
- RU 2054972
- US 4722784 A
- DE 2836496 A
- RU 2132749
- US 5651879 A
- DE 2836496 A1
- FR 2725208 A1